# EUROPÄISCHE PATENTSCHRIFT

(11) **EP 4 715 250 B1**
(45) Veröffentlichungstag und Bekanntmachung des Hinweises auf die Patenterteilung: **05.08.2026**
(21) Anmeldenummer: 25189888.8
(22) Anmeldetag: 16.07.2025
(51) Int. Cl.: F16P 3/14, G05B 19/048, B25J 9/16, G05B 9/02

(54) **SYSTEM ZUR ÜBERPRÜFUNG EINES SCHUTZFELDES**
SYSTEM FOR TESTING A PROTECTIVE FIELD
SYSTÈME DE VÉRIFICATION D'UN CHAMP DE PROTECTION

(30) Priorität: 20.09.2024 DE 102024127205
(43) Veröffentlichungstag der Anmeldung: 25.03.2026
(73) Patentinhaber: SICK AG, 79183 Waldkirch (DE)
(72) Erfinder: BALDISCHWEILER, Boris, 79276 Reute (DE); GEBAUER, Jens, 79183 Waldkirch (DE)
(74) Vertreter: Manitz Finsterwald Patent- und Rechtsanwaltspartnerschaft mbB

(56) Entgegenhaltungen:
- EP-A1- 2 048 557
- DE-A1- 102021 120 130

## Beschreibung

Die Erfindung betrifft ein System zur Überwachung eines Schutzfeldes sowie ein Verfahren zur Überwachung eines Schutzfeldes.

In industriellen Umgebungen, insbesondere in Produktionshallen, werden zum Schutz vor Gefahren Schutzfelder mittels optischer Sensoren definiert. Diese Schutzfelder dienen dazu, gefahrbringende Anlagen wie Roboter oder Maschinen automatisch abzuschalten, sobald ein Mensch (oder ein Objekt) das Schutzfeld betritt. Die Konfiguration dieser Schutzfelder erfolgt in der Regel softwarebasiert und es ist essentiell, dass die Schutzfelder nach der Einrichtung im Raum präzise überprüft werden, um sicherzustellen, dass sie sich an den vorgesehenen Stellen befinden.

Ein Problem bei der Überwachung und Überprüfung dieser Schutzfelder besteht darin, dass sich die Position und/oder Ausrichtung der verwendeten optischen Sensoren, wie z.B. Laserscanner, im Laufe der Zeit leicht verändern kann. Eine solche Veränderung kann dazu führen, dass die Schutzfelder nicht mehr exakt dort verlaufen, wo sie ursprünglich konfiguriert wurden. Ferner kann auch ein technischer Defekt des sicheren Sensors zu einem entsprechenden Fehler führen. Dies birgt ein erhebliches Sicherheitsrisiko, da ein Schutzfeld möglicherweise nicht mehr zuverlässig erfasst, wenn eine Person in den Gefahrenbereich eintritt.

Eine Möglichkeit der Überprüfung besteht darin, die Schutzfelder manuell, d.h. durch einen Menschen, durchzuführen. Beispielsweise kann ein Mensch unter Verwendung eines Gegenstands die Schutzfeldgrenzen testen, um festzustellen, wann der Sensor auslöst. Diese Überprüfung muss in regelmäßigen Zeitabständen wiederholt werden, um sicherzustellen, dass eventuelle Veränderungen der Sensorposition keine Gefahr darstellen.

Allerdings sind mit dieser Method erhebliche Nachteile verbunden. Die manuelle Überprüfung ist aufwendig und zeitintensiv, was zu unerwünschten Standzeiten der Maschine führt. Zudem erfordert die Prüfung eine hohe Genauigkeit und Sorgfalt, um sicherzustellen, dass das Schutzfeld korrekt überprüft wird. Diese Aspekte erhöhen den Aufwand für die Instandhaltung und verringern die Produktivität der Anlage. Ein weiteres Problem besteht darin, dass die Zeitabstände zwischen zwei aufeinanderfolgenden Überprüfungen eines Schutzfeldes oftmals groß sind, wodurch es in diesem Zeitabschnitt zu potentiell gefährlichen Zwischenfällen kommen könnte, bevor ein Fehler erkannt und behoben wird.

EP 2 048 557 A1 offenbart einen optoelektronischen Sensor und eine mobile Vorrichtung, die zusammenarbeiten, um Schutzfelder zu konfigurieren, wobei die mobile Vorrichtung ihre Position im Raum bestimmt und diese an den Sensor überträgt, der die Daten zur Definition von Schutzfeldern nutzt. DE 10 2021 120130 A1 offenbart ein Sicherheitssystem, das ein Funkortungssystem und einen ortsauflösenden Sensor kombiniert, wobei Funktransponder an Personen oder Objekten eine präzise Positionsbestimmung ermöglichen und der Sensor ein Schutzfeld überwacht und nur bei Annäherung aktiviert.

Es ist eine Aufgabe der vorliegenden Erfindung, die vorstehenden Nachteile zu überwinden und ein verbessertes System und Verfahren zur Überprüfung von Schutzfeldern bereitzustellen.

Diese Aufgabe wird durch die Gegenstände der unabhängigen Ansprüche gelöst.

Ein erster Aspekt der Erfindung bezieht sich auf ein System mit mindestens einem sicheren Sensor zur Überwachung mindestens eines Schutzfeldes, einer mobilen

Prüfmaschine zum Überprüfen des Schutzfeldes und einer Steuer- und Auswerteeinheit, welche zumindest mittelbar mit dem sicheren Sensor und der Prüfmaschine verbunden ist;
wobei die Steuer- und Auswerteeinheit ausgebildet:
unter Verwendung der Prüfmaschine eine Überprüfung des sicheren Sensors und/oder zumindest eines Abschnitts des Schutzfeldes durchzuführen, und
basierend auf der Überprüfung des sicheren Sensors und/oder Schutzfeldes einen Fehlerzustand, insbesondere des sicheren Sensors und/oder der Prüfmaschine, festzustellen, und
bei Feststellung eines Fehlerzustands eine sicherheitsgerichtete Maßnahme einzuleiten,
wobei die Steuer- und Auswerteeinheit ferner ausgebildet ist:
   unter Verwendung einer weiteren Prüfmaschine eine weitere Überprüfung des Schutzfeldes durchzuführen,
   wobei die weitere Überprüfung als Teil der sicherheitsgerichteten Maßnahme erfolgt,
   wobei ein Fehlerzustand des sicheren Sensors festgestellt wird, wenn basierend auf der weiteren Überprüfung ein Fehlerzustand feststellt wird,
   wobei ein Fehlerzustand der Prüfmaschine festgestellt wird, wenn basierend auf der weiteren Überprüfung kein Fehlerzustand festgestellt wird.

Ein Schutzfeld ist ein durch eine 2D- oder 3D-Geometrie konfigurierter oder definierter Teilbereich des Erfassungsbereichs des sicheren Sensors. Der sichere Sensor erkennt, wie einleitend beschrieben, Objekteingriffe in das Schutzfeld und ist dafür ausgebildet, in diesem Fall ein sicherheitsgerichtetes Ausgangssignal für eine überwachte Maschine, beispielsweise eine Arbeitsmaschine, auszugeben. Dazu weist der sichere Sensor vorzugsweise einen sicheren Ausgang auf, der beispielsweise zweikanalig ausgelegt ist, um das sicherheitsgerichtete Ausgangssignal, z.B. als OSSD (Output Signal Switching Device), auszugeben. In der Betriebsphase sorgt das sichere Ausgangssignal dafür, dass eine Unfallgefahr beseitigt wird, indem die Arbeitsmaschine ausweicht, verlangsamt oder anhält. Die überwachte Arbeitsmaschine kann beispielsweise ein Industrieroboter oder eine andere Maschine sein, welche insbesondere eine potenzielle Gefahr darstellt. Es ist möglich, dass mehrere sichere Sensoren vorgesehen sind, um einen größeren Überwachungsbereich abzudecken oder durch überlappende Überwachung Redundanz zu schaffen und Abschattungen zu vermeiden, wobei ein Sensor jeweils ein Schutzfeld oder mehrere Schutzfelder überwachen kann. Vorzugsweise ist der sichere Sensor an einer vordefinierten Position mit einer vordefinierten Ausrichtung befestigt. Insbesondere ist die vordefinierte Position und/oder Ausrichtung des sicheren Sensors bekannt. Der sichere Sensor nutzt vorzugsweise ein berührungsloses Wirkprinzip insbesondere als optoelektronischer Sensor wie eine Kamera, eine 3D-Kamera oder ein Laserscanner, aber nicht-optisch wie beispielsweise Ultraschall oder Radar. Sicher und Sicherheit bedeuten wie in der gesamten Beschreibung, dass Maßnahmen ergriffen sind, um Fehler bis zu einem spezifizierten Sicherheitsniveau zu beherrschen bzw. Vorschriften einer einschlägigen Sicherheitsnorm für Maschinensicherheit oder berührungslos wirkende Schutzeinrichtungen einzuhalten.

Die Prüfmaschine ist mobil, d.h. kann sich von einem Ort zum anderen, insbesondere selbstständig, bewegen. Unter "mobil" ist nicht zu verstehen, dass die Prüfmaschine an einem festen Ort positioniert ist und sich nur einzelne Teile der Prüfmaschine bewegen können. Beispielsweise kann die Prüfmaschine ein Fahrzeug oder Roboter sein. Die Prüfmaschine kann ferner mit Sensorik ausgestattet sein, mit welcher sie beispielsweise autonom in ihrer Umgebung navigieren kann. Ferner können die Abmessungen der Prüfmaschine der Steuer- und Auswerteeinheit bekannt sein. Durch die Verwendung von Markierungen an vorgegebenen Positionen der Prüfmaschine können somit beispielsweise Rückschlüsse über eine Position und/oder Ausrichtung und/oder einen durch die Prüfmaschine vereinnahmten Raum geschlossen werden, wenn die Markierung von einem Sensor, z.B. dem sicheren Sensor, erfasst wird. Ein Eindringen der Prüfmaschine in ein Schutzfeld wird, wie bei jedem Objekt entsprechende Abmessung, als Schutzfeldverletzung erkannt bzw. kann für Tests verwendet werden, ob das Schutzfeld richtig konfiguriert ist und der sichere Sensor tatsächlich darauf anspricht, einschließlich Bestimmungen einer Reaktionszeit. Die Prüfmaschine kann außerdem eine Prüfvorrichtung umfassen oder tragen, mit der das Eindringen in das Schutzfeld provoziert werden kann. Die Prüfvorrichtung kann insbesondere im Vergleich zur Prüfmaschine kleinere Abmessungen aufweisen, so dass eine präzise und kontrollierte Schutzfeldüberprüfung mittels der Prüfvorrichtung möglich ist. Beispielsweise kann die Prüfvorrichtung die Abmessungen eines menschlichen Fingers, einer menschlichen Hand, eines menschlichen Arms, eines menschlichen Beins oder eines anderen menschlichen Körperteils aufweisen, mit einem Durchmesser und/oder einer Größe in zumindest einer Raumrichtung von z.B.14 mm, 20 mm, 40 mm, 55 mm, 70 mm, 120 mm, 150 mm oder 200 mm. Damit kann eine normkonforme Validierung der Schutzfelder vorgenommen werden.

Die Steuer- und Auswerteeinheit ist dazu ausgebildet, unter Verwendung der Prüfmaschine eine Überprüfung des sicheren Sensors und/oder zumindest eines Abschnitts des Schutzfeldes durchzuführen. Mit anderen Worten werden die einer Überprüfung zugehörigen Daten von der Steuer- und Auswerteeinheit, insbesondere in Echtzeit, verarbeitet, um einen "Fehlerzustand" (also das Eindringen eines Gegenstands in das Schutzfeld) festzustellen. Die Steuer- und Auswerteeinheit kann hierzu die Prüfmaschine zumindest teilweise steuern, insbesondere wenn eine Überprüfung des sicheren Sensors und/oder des Schutzfeldes ansteht. Die Steuer- und Auswerteeinheit kann der Prüfmaschine, insbesondere einer Steuerung der Prüfmaschine, beispielsweise Anweisungen geben, um eine bestimmte Aktion durchzuführen. Gleiches gilt für den sicheren Sensor. Hierzu ist die Steuer- und Auswerteeinheit zumindest mittelbar mit dem sicheren Sensor und der Prüfmaschine verbunden. Beispielsweise kann die Steuer- und Auswerteeinheit die Prüfmaschine dazu veranlassen, sich zu einer bestimmten Stelle im Raum zu begeben, einer bestimmten Strecke zu folgen, einen bestimmten Bereich im Raum z.B. mittels eines Sensors der Prüfmaschine zu erfassen bzw. zu beobachten oder eine andere geeignete Aktion durchzuführen.

Für die Überprüfung des sicheren Sensors und/oder des Schutzfeldes kann die Steuer- und Auswerteeinheit auch von dem sicheren Sensor und von der Prüfmaschine übermittelte Daten sowie auf bereits bekannte Daten zurückgreifen, beispielsweise Raumdaten wie insbesondere Informationen hinsichtlich der Größe des Raums, der Position und/oder Ausrichtung von Objekten, insbesondere stationären Objekten wie dem sicheren Sensor, sowie Informationen hinsichtlich der Abmessung von Schutzfeldern, beispielsweise der vordefinierten Position von Schutzfeldern bzw. Schutzfeldgrenzen, welche als Referenz verwendet werden kann. Die gespeicherten Daten können ferner eine Sensorkonfiguration des sicheren Sensors umfassen. Die Überprüfung des sicheren Sensors und/oder des Schutzfeldes erfolgt insbesondere durch die Provokation einer Schutzfeldverletzung und/oder durch die Überprüfung der Position und/oder Ausrichtung des sicheren Sensors.

Die Sicherheitsreaktion umfasst beispielsweise ein Abschalten einer Arbeitsmaschine, ein Einschränken eines Operationsbetriebs der Arbeitsmaschine, z.B. das Verlangsamen der Arbeitsmaschine, ein Ausgeben eines Wartungssignals, welches anzeigt, dass eine Wartung der Arbeitsmaschine bzw. Anlage erforderlich ist und/oder dass der Betrieb der Arbeitsmaschine bzw. Anlage nicht sicher ist. Das Wartungssignal ist beispielsweise ein akustisches Signal, ein visuelles Signal und/oder eine Nachricht an einen Bediener der Arbeitsmaschine. Die Sicherheitsreaktion kann beispielsweise durch das zuvor beschriebene sicherheitsgerichtete Ausgangssignal ausgelöst werden.

Die Steuer- und Auswerteeinheit ist zumindest mittelbar und vorzugsweise drahtlos über ein beliebiges an sich bekanntes Kommunikationsprotokoll mit dem sicheren Sensor und der Prüfmaschine verbunden, also direkt oder über ein weiteres Gerät, wie eine übergeordnete Steuerung oder eine Cloud. Die Konfiguration des Schutzfeldes ist vorzugsweise über diese Verbindung, aber auch auf beliebige andere Weise, in der Steuer- und Auswerteeinheit bekannt oder die Steuer- und Auswerteeinheit wird bereits für die Konfiguration eingesetzt und kennt deshalb die Schutzfelder. Die Steuer- und Auswerteeinheit ist vorzugsweise ein Controller, welcher über einen Prozessor und einen Speicher verfügt, und insbesondere als zentrale Steuerung ausgebildet, die weder Teil des sicheren Sensors noch Teil der Prüfmaschine ist. Alternativ kann die Steuer- und Auswerteeinheit auch als Teil einer Steuerung des sicheren Sensors, der Prüfmaschine oder der Arbeitsmaschine ausgebildet sein. Ferner kann die Steuer- und Auswerteeinheit mit einer Visualisierungsvorrichtung wie eine Anzeige verbunden sein, welche die Szenerie einschließlich des sicheren Sensors, der Prüfmaschine, des Schutzfeldes und/oder der Arbeitsmaschine visualisiert. Ein Nutzer kann ferner mittels einer Eingabevorrichtung eine Überprüfung des sicheren Sensors und/oder des Schutzfeldes initiieren, überwachen und/oder stoppen. Insbesondere kann der Nutzer mittels der Nutzereingabe ein entsprechendes Steuersignal an die Steuer- und Auswerteeinheit übermitteln, welche in Reaktion auf das Steuersignal eine entsprechende Aktion ausführt. Es ist denkbar, dass die Visualisierungsvorrichtung und die Eingabevorrichtung als eine einzige Vorrichtung, z.B. als ein Tablet, ausgebildet sind. Vorzugsweise ist das System derart ausgebildet, dass es nach einer Initialisierung vollautomatisiert eine Überprüfung des sicheren Sensors und/oder des Schutzfeldes, insbesondere in vordefinierten Zeitabständen, durchführt.

Die Erfindung geht von dem Grundgedanken aus, die Überprüfung von Schutzfeldern durch mobile, insbesondere automatisierte, Prüfmaschinen durchzuführen, ohne dass ein menschliches Eingreifen erforderlich ist. Hierfür ist eine zentrale Steuer- und Auswerteeinheit vorgesehen, welche zumindest mittelbar mit dem sicheren Sensor und der Prüfmaschine verbunden ist und somit basierend auf übermittelten Daten des sicheren Sensors sowie der Prüfmaschine als auch gespeicherten Daten, beispielsweise zur Sensorkonfiguration oder den Schutzfeldgrenzen, insbesondere zu deren Position und/oder Ausrichtung, einen fehlerhaften Zustand erkennen kann und entsprechend sicherheitsgerichtete Maßnahmen ergreifen kann, um die Sicherheit von Personen in den jeweiligen Bereichen zu gewährleisten.

Die Erfindung hat den Vorteil, dass durch die Verwendung von Prüfmaschinen zur Überprüfung der Schutzfelder entsprechende Anlagen mit weniger Personalaufwand überprüft werden können. Darüber hinaus wird die Sicherheit des in der Anlage arbeitenden Personals erhöht, da zum einen das Personal die Überprüfungen der Schutzfelder nicht mehr selber durchführen muss und zum anderen die Überprüfung der Schutzfelder durch die Verwendung von Prüfmaschinen in engeren Zeitabständen erfolgen kann. Dementsprechend werden korrupte, d.h. unkorrekt erfasste, Schutzfelder schneller detektiert. Ein weiterer Vorteil besteht darin, dass sich die Verfügbarkeit und damit die Effizienz der Anlage bzw. Arbeitsmaschine erhöht, da entsprechende Tests der Schutzfelder während des laufenden Betriebs durchgeführt werden können. Darüber hinaus finden keine Flüchtigkeitsfehler, wie sie beim Überprüfen durch einen Menschen vorkommen, statt.

Weitere Ausführungsformen der Erfindung sind der Beschreibung, den Unteransprüchen und den Zeichnungen zu entnehmen.

Gemäß einer ersten Ausführungsform ist die Prüfmaschine eine autonome Maschine, insbesondere ein Automated Guided Vehicle (AGV) oder ein Autonomous Mobile Robot (AMR). Autonom bedeutet hierbei beispielsweise, dass die Prüfmaschine in der Lage ist, Aufgaben selbstständig und ohne menschliches Eingreifen zu erledigen. Beispielsweise kann die Prüfmaschine autonom navigierend sein, d.h. die Prüfmaschine kann eine vorgegebene Strecke selbstständig abfahren. Die Prüfmaschine kann auf der Grundlage von Algorithmen, vordefinierten Prozessen und/oder durch die Nutzung von künstlicher Intelligenz Entscheidungen treffen, Prozesse ausführen und sich an veränderte Umstände anpassen, ohne dass ein menschliches Eingreifen erforderlich ist. Die jeweiligen Berechnungen und/oder Algorithmen können auf einer Steuerung der Prüfmaschine und/oder der Steuer- und Auswerteeinheit ausgeführt werden. Ferner erhält die Prüfmaschine zur Überprüfung des sicheren Sensors und/oder des Schutzfeldes vorzugsweise Steueranweisungen von der Steuer- und Auswerteeinheit. Die Prüfmaschine kann beispielsweise über eine zugehörige Prüfmaschinensteuerung, welche die Steueranweisungen der Steuer- und Auswerteeinheit über eine entsprechende Kommunikationsschnittstelle empfängt, sowie über Sensoren zur Erfassung ihrer Position, Sensoren zur Erfassung ihrer Umgebung und/oder über andere geeignete Sensoren verfügen.

Insbesondere kann die autonome Maschine ein Roboter, insbesondere ein AGV oder AMR, sein. Ein AGV ist beispielsweise ein fahrerloses Transportsystem, welches sich entlang vordefinierter Routen bewegen kann und insbesondere in Lagerhäusern bzw. -hallen verwendet wird. Ein AMR hingegen ist beispielsweise ein autonomer mobiler Roboter, der sich selbstständig in einer dynamischen Umgebung navigieren kann. Der AMR kann unabhängig von vordefinierten Routen agieren. Beispielsweise kann die Handlung eines AMR basierend auf Sensoren, Kameras, Laserscannern und/oder Algorithmen erfolgen, indem die Umgebung des AMRs in Echtzeit erfasst wird und einer bestimmten Situation entsprechende Handlungen vorgenommen werden.

Ein Vorteil der Erfindung besteht außerdem darin, dass in einer Lagerhalle bestehende AGVs und/oder AMRs für die Überprüfung von Schutzfeldern verwendet werden können, so dass vorhandene Ressourcen effizient ausgenutzt werden. Die Erfindung ermöglicht es somit, dass insbesondere bereits, z.B. in einer Lagerhalle, vorhandene autonome Maschinen als Prüfmaschinen verwendet werden können.

Gemäß einer Ausführungsform umfasst die Prüfmaschine einen Sensor zur Erfassung ihrer Umgebung, Position und/oder Ausrichtung, wobei die Überprüfung des Schutzfeldes umfasst: basierend auf den Sensordaten des Prüfmaschinensensors eine Position und/oder Ausrichtung des sicheren Sensors zu ermitteln und basierend auf einem Vergleich der ermittelten Position und/oder Ausrichtung des sicheren Sensors mit einer vorgegebenen Position und/oder Ausrichtung des sicheren Sensors den Fehlerzustand zu ermitteln. Die Prüfmaschine kann beispielsweise basierend auf den Sensordaten des Prüfmaschinensensors ihre eigene Position und/oder Ausrichtung im Raum ermitteln. Hierzu kann die Prüfmaschine insbesondere Technologien wie Indoor-GPS, RFID-Tags, optische Tags und/oder (V)SLAM nutzen. Rein beispielhaft wird die Ermittlung der Position und/oder Ausrichtung der Prüfmaschine anhand von RFID-Tags, deren Position im Raum bekannt ist, beschrieben:
Jeder RFID-Tag kann beispielsweise eine eindeutige ID aufweisen, welche beim Lesen mittels eines RFID-Lesers übermittelt wird. Wenn die Prüfmaschine die RFID-Tags sowie deren zugehörigen Position im Raum mittels eines RFID-Lesers erfasst, kann die Prüfmaschine seine eigene Position und/oder Ausrichtung relativ zu diesen Tags bestimmen. Wenn die Prüfmaschine beispielsweise mehrere Tags gleichzeitig oder nacheinander erfasst, kann durch Triangulation oder andere Berechnungsmethoden die Position und/oder Ausrichtung der Prüfmaschine im Raum ermittelt werden. Der zumindest eine Sensor der Prüfmaschine kann eine Kamera, ein Laserscanner, ein Radarsensor, ein RFID-Leser, ein Ultraschallsensor und/oder jeder andere geeignete Sensor sein.

Ferner kann basierend auf den Sensordaten des Sensors der Prüfmaschine die Position und/oder Ausrichtung des sicheren Sensors im Raum, insbesondere in Bezug zur Position und/oder Ausrichtung der Prüfmaschine, ermittelt werden. Beispielsweise kann die Position und/oder Ausrichtung des sicheren Sensors mittels einer an der Prüfmaschine befestigten Kamera erfasst werden. Die Steuer- und Auswerteeinheit ist beispielsweise dazu ausgebildet, basierend auf der Position und/oder Ausrichtung der Prüfmaschine und der relativen Position und/oder Ausrichtung des sicheren Sensors in Bezug zu der Prüfmaschine, z.B. mittels einer Koordinatentransformation, die absolute Position und/oder Ausrichtung des sicheren Sensors zu schlussfolgern bzw. zu ermitteln. Wenn die ermittelte Position und/oder Ausrichtung des sicheren Sensors nicht mit der vorgegebenen Position und/oder Ausrichtung des sicheren Sensors übereinstimmt oder wenn die Abweichung zwischen der ermittelten Position und/oder Ausrichtung des sicheren Sensors und der vorgegebenen Position und/oder Ausrichtung des sicheren Sensors stärker als ein vorgegebener Abweichungsschwellenwert voneinander abweichen, so kann die Steuer- und Auswerteeinheit einen Fehlerzustand feststellen und eine sicherheitsgerichtete Maßnahme einleiten.

Gemäß einer Ausführungsform umfasst die Überprüfung des Schutzfeldes basierend auf der ermittelten Position und/oder Ausrichtung des sicheren Sensors eine Position und/oder einen Bereich des Schutzfeldes zu ermitteln und basierend auf einem Vergleich der ermittelten Position und/oder dem ermittelten Bereich des Schutzfeldes mit einer vorgegebenen Position und/oder einem vorgegebenen Bereich des Schutzfeldes einen Fehlerzustand zu ermitteln. Wie bereits beschrieben kann die vorgegebene Position und/oder der vorgegebene Bereich des Schutzfeldes hinterlegt sein, so dass die Steuer- und Auswerteeinheit auf die vorgegebene Position und/oder den vorgegebenen Bereich des Schutzfeldes zurückgreifen kann. Beispielsweise können die zur Definition des Schutzfeldes erforderlichen spezifischen Daten und/oder Koordinaten und damit der zu überwachende Bereich in dem Speicher hinterlegt sein. Bei einem rechteckigen Schutzfeld kann die Position und/oder der Bereich des Schutzfeldes beispielsweise durch die Koordinaten der Eckpunkte des Schutzfeldes definiert sein, wohingegen bei einem kreisförmigen Schutzfeld die Position und/oder der Bereich des Schutzfeldes beispielsweise durch die Koordinaten des Mittelpunkts des Kreises und dessen Radius definiert ist. Basierend auf der ermittelten Position und/oder Ausrichtung des sicheren Sensors kann der Erfassungsbereich des sicheren Sensors und somit auch der Bereich, den der sichere Sensor als Schutzfeld erfasst, ermittelt werden. Wenn die ermittelte Position und/oder der ermittelte Bereich des Schutzfeldes mit der vorgegebenen Position und/oder dem vorgegebenen Bereich des Schutzfeldes nicht übereinstimmt, oder wenn die ermittelte Position und/oder der ermittelte Bereich des Schutzfeldes von der vorgegebenen Position und/oder dem vorgegebenen Bereich des Schutzfeldes stärker als ein vorgegebener Abweichungsschwellenwert abweicht, kann die Steuer- und Auswerteeinheit dazu ausgebildet sein, einen Fehlerzustand festzustellen und eine sicherheitsgerichtete Maßnahme einzuleiten.

Gemäß einer Ausführungsform umfasst die Überprüfung des Schutzfeldes: basierend auf den Sensordaten des Prüfmaschinensensors eine erste Position und/oder Ausrichtung der Prüfmaschine zu ermitteln und basierend auf den Sensordaten des sicheren Sensors eine zweite Position und/oder Ausrichtung der Prüfmaschine zu ermitteln, und basierend auf einem Vergleich der ersten Position und/oder Ausrichtung der Prüfmaschine mit der zweiten Position und/oder Ausrichtung der Prüfmaschine einen Fehlerzustand zu ermitteln. Wie bereits beschrieben, kann die Prüfmaschine ihre eigene Position und/oder Ausrichtung im Raum basierend auf den Sensordaten des Prüfmaschinensensors ermitteln. Ferner kann eine zweite Position und/oder Ausrichtung der Prüfmaschine basierend auf den Sensordaten des sicheren Sensors ermittelt werden. Hierzu kann die Prüfmaschine beispielsweise mit Markierungen versehen sein, deren Position und/oder Ausrichtung auf der Prüfmaschine bekannt ist. Anhand der Markierungen kann somit die Position und/oder Ausrichtung der Prüfmaschine, insbesondere mit Bezug zur Position und/oder Ausrichtung des sicheren Sensors, ermittelt werden. Es ist anzumerken, dass derartige Markierungen an der Prüfmaschine zwar hilfreich, aber nicht zwingend erforderlich sind, da der sichere Sensor die Position und/oder Ausrichtung der Prüfmaschine ohne solche Markierungen ermitteln kann. Da die Position und/oder Ausrichtung des sicheren Sensors vordefiniert ist, kann anhand von entsprechenden Berechnungsmethoden die tatsächliche bzw. absolute Position und/oder Ausrichtung der Prüfmaschine im Raum als zweite Position und/oder Ausrichtung der Prüfmaschine ermittelt werden. Wenn die erste ermittelte Position und/oder Ausrichtung der Prüfmaschine und die zweite ermittelte Position und/oder Ausrichtung der Prüfmaschine nicht übereinstimmen oder wenn die erste ermittelte Position und/oder Ausrichtung der Prüfmaschine von der zweiten ermittelten Position und/oder Ausrichtung der Prüfmaschine stärker als ein vorgegebener Abweichungsschwellenwert abweicht, kann die Steuer- und Auswerteeinheit einen Fehlerzustand feststellen.

Gemäß einer Ausführungsform umfasst die Überprüfung des Schutzfeldes: dass die Steuer- und Auswerteeinheit die Prüfmaschine dazu veranlasst sich zumindest abschnittsweise entlang der vorgegebenen Schutzfeldgrenzen zu bewegen, insbesondere ohne die vorgegebenen Schutzfeldgrenzen zu berühren und/oder zu überschreiten. Hierdurch kann beispielsweise geprüft werden, ob eine unplanmäßige Sicherheitsreaktion ausgelöst wird, wobei bei Auslösen einer unplanmäßigen Sicherheitsreaktion ein Fehlerzustand festgestellt werden kann. Eine unplanmäßige Sicherheitsreaktion liegt beispielsweise dann vor, wenn die Prüfmaschine gemäß den vorgegebenen Schutzfeldgrenzen kein Schutzfeldverletzung begeht, jedoch trotzdem eine Sicherheitsreaktion ausgelöst wird. Das Auslösen einer unplanmäßigen Sicherheitsreaktion zeigt somit insbesondere an, dass die Schutzfeldgrenzen bzw. das Schutzfeld des sicheren Sensors nicht mit den vorgegebenen Schutzfeldgrenzen bzw. dem vorgegebenen Schutzfeld übereinstimmt. Es kann jedoch auch geprüft werden, ob eine planmäßige Sicherheitsreaktion ausbleibt, wobei bei Ausbleiben einer planmäßigen Sicherheitsreaktion ein Fehlerzustand festgestellt werden kann. Ein Ausbleiben einer planmäßigen Sicherheitsreaktion liegt beispielsweise dann vor, wenn die Prüfmaschine gemäß den vorgegebenen Schutzfeldgrenzen eine Schutzfeldverletzung begeht, jedoch keine Sicherheitsreaktion ausgelöst wird. In diesem Fall bewegt sich die Prüfmaschine beispielsweise entlang der Schutzfeldgrenzen und überschreitet diese zumindest teilweise. Die Prüfmaschine kann bei einer derartigen Prüfung insbesondere eine Maschine mit reduzierten Anforderungen an die Sensorik sein, z.B. ein AGV, da die Prüfmaschine keine komplexe Sensorik zum Abfahren der vorgegebenen, d.h. gespeicherten, Schutzfeldgrenzen benötigt.

Gemäß einer Ausführungsform ist die Steuer- und Auswerteeinheit ausgebildet, während sich die Prüfmaschine entlang der vorgegebenen Schutzfeldgrenzen bewegt, kontinuierlich oder in vorgegebenen zeitlichen Abständen eine der in den vorstehenden Ausführungsformen beschriebenen Überprüfungen durchzuführen. Demnach kann ein Fehlerzustand festgestellt werden, wenn eine der vorstehend beschriebenen Überprüfungen ergibt, dass ein Fehlerzustand vorliegt und/oder wenn eine unplanmäßige Sicherheitsreaktion ausgelöst wird oder eine planmäßige Sicherheitsreaktion nicht ausgelöst wird. Durch diese doppelte Überprüfung kann insbesondere die Zuverlässigkeit der Überprüfung und damit die Sicherheit des Systems erhöht werden.

Gemäß einer Ausführungsform umfasst die Überprüfung des Schutzfeldes, dass die Steuer- und Auswerteeinheit die Prüfmaschine dazu veranlasst, zumindest eine Schutzfeldgrenze des Schutzfeldes zumindest teilweise zu überschreiten. Hierdurch soll beispielsweise eine Schutzfeldverletzung provoziert werden. Wenn trotz Überschreitung der Schutzfeldgrenze, d.h. trotz Schutzverletzung, keine Sicherheitsreaktion ausgelöst wird, kann ein Fehlerzustand festgestellt werden. Darüber hinaus kann ein Schutzfeld mehrere Schutzfeldgrenzen aufweisen, welche beispielsweise unterschiedlichen Sicherheitsstufen zugeordnet werden können. Beispielsweise kann das Überschreiten einer ersten Schutzfeldgrenze von niedrigerer Sicherheitsrelevanz sein als das Überschreiten einer zweiten Schutzfeldgrenze. In einem solchen Fall kann die Steuer- und Auswerteeinheit die Prüfmaschine dazu veranlassen, nacheinander die unterschiedlichen Schutzfeldgrenzen zu überschreiten, um zu überprüfen, ob eine einer Sicherheitsstufe entsprechende Sicherheitsreaktion ausgelöst wird. Die Steuer- und Auswerteeinheit kann die Prüfmaschine beispielsweise dazu veranlassen, in einem ersten Schritt eine erste Schutzfeldgrenze anzufahren, zu überschreiten, zu stoppen, die Durchführung einer zugehörigen ersten Sicherheitsreaktion abzuwarten und zu evaluieren, ob die erste Sicherheitsreaktion planmäßig erfolgt ist. Die Steuer- und Auswerteeinheit kann die Prüfmaschine anschließend dazu veranlassen, in einem zweiten Schritt eine zweite Schutzfeldgrenze, welche einer höheren Sicherheitsstufe zugeordnet ist, anzufahren, zu überschreiten, zu stoppen, die Durchführung einer zweiten Sicherheitsreaktion abzuwarten und zu evaluieren, ob die zweite Sicherheitsreaktion planmäßig erfolgt ist.

Ferner ist die Steuer- und Auswerteeinheit ausgebildet, unter Verwendung einer weiteren Prüfmaschine eine weitere Überprüfung des Schutzfeldes durchzuführen. Dabei kann die weitere Überprüfung entsprechend einer der vorstehend beschriebenen Überprüfungen erfolgen. D.h. die weitere Prüfmaschine wiederholt die durch die Prüfmaschine ausgeführte Überprüfung. Insbesondere kann hierdurch das Überprüfungsergebnis der Prüfmaschine validiert werden und damit eine höhere Zuverlässigkeit des Überprüfungsergebnisses erzielt werden. Eine erhöhte Zuverlässigkeit des Überprüfungsergebnisses führt zu einer entsprechenden höheren Sicherheit des Gesamtsystems. Insbesondere kann die weitere Überprüfung unabhängig von dem Ergebnis der Überprüfung durch die Prüfmaschine erfolgen. Grundsätzlich kann eine beliebige Anzahl solcher weiterer Überprüfungen erfolgen.

Ferner erfolgt die weitere Überprüfung als Teil der sicherheitsgerichteten Maßnahme, wobei ein Fehlerzustand des sicheren Sensors festgestellt wird, wenn basierend auf der weiteren Überprüfung ein Fehlerzustand festgestellt wird, wobei ein Fehlerzustand der Prüfmaschine festgestellt wird, wenn basierend auf der weiteren Überprüfung kein Fehlerzustand festgestellt wird. Die weitere Überprüfung wird somit dazu verwendet, um festzustellen, ob der sichere Sensor oder die Prüfmaschine fehlerhaft ist. Wird der durch die Überprüfung ermittelte Fehlerzustand durch die weitere Überprüfung bestätigt, d.h. wenn durch die weitere Überprüfung ebenfalls ein Fehlerzustand festgestellt wird, so deutet dies darauf hin, dass der sichere Sensor fehlerhaft ist bzw. dass die Position und/oder Ausrichtung des sicheren Sensors nicht der vorgegebenen Position und/oder Ausrichtung des sicheren Sensors entspricht, so dass ein Fehlerzustand des sicheren Sensors festgestellt werden kann. Insbesondere kann ein Fehlerzustand des sicheren Sensors dadurch gekennzeichnet sein, dass das von dem sicheren Sensor überwachte Schutzfeld nicht dem zu überwachenden Schutzfeld bzw. dem vorgebebenen Schutzfeld entspricht.

Wird der durch die Überprüfung ermittelte Fehlerzustand durch die weitere Überprüfung nicht bestätigt, d.h. wenn durch die weitere Überprüfung kein Fehlerzustand festgestellt wird, so deutet dies hingegen darauf hin, dass die Prüfmaschine fehlerhaft ist, so dass ein Fehlerzustand der Prüfmaschine festgestellt werden kann. Ein Fehlerzustand der Prüfmaschine ist beispielsweise dadurch gekennzeichnet, dass der Sensor der Prüfmaschine fehlerhaft ist und beispielsweise die Position und/oder Ausrichtung der Prüfmaschine und/oder die Position und/oder Ausrichtung des sicheren Sensors unkorrekt ermittelt wird.

Gemäß einer Ausführungsform ist die Steuer- und Auswerteeinheit ausgebildet, das überprüfte Schutzfeld und/oder den überprüften Schutzfeldabschnitt und/oder einen Zeitpunkt und/oder eine Dauer der Überprüfung des Schutzfeldes in einer Datenbank zu speichern. Basierend auf der Datenbank kann dann ermittelt werden, wann und in welchem Umfang ein Schutzfeld geprüft werden muss. Da ein Schutzfeld in der Regel in regelmäßigen Zeitabständen geprüft wird, kann die Steuer- und Auswerteeinheit unter Verwendung der Datenbank identifizieren, ob und in welchem Umfang ein jeweiliges Schutzfeld eine Überprüfung benötigt. Ferner kann die Steuer- und Auswerteeinheit basierend auf der Datenbank ermitteln, ob und in welchem Umfang eine weitere Überprüfung des Schutzfeldes durch eine weitere Prüfmaschine nötig ist.

Gemäß einer Ausführungsform umfasst die sicherheitsgerichtete Maßnahme eine der bereits vorstehend beschriebenen Sicherheitsreaktionen. Wird ein Fehlerzustand der Prüfmaschine festgestellt, so kann eine entsprechende Sicherheitsreaktion als sicherheitsgerichetete Maßnahme auch für die Prüfmaschine ausgelöst werden, beispielsweise kann die Prüfmaschine abgeschaltet werden und die Position der Prüfmaschine der Steuer- und Auswerteeinheit übermittelt werden, damit beispielsweise ein Techniker die Prüfmaschine aus dem Betrieb nehmen kann, um diese gegebenenfalls zu reparieren.

Gemäß einer Ausführungsform ist die Steuer- und Auswerteeinheit ausgebildet, während einer Überprüfung des Schutzfeldes das Ausführen von Sicherheitsreaktionen, welche den Betrieb der Arbeitsmaschine einschränken, zumindest teilweise, insbesondere vollständig, zu deaktivieren. Insbesondere werden nur Sicherheitsreaktionen, welche den Betrieb der Arbeitsmaschine einschränken, deaktiviert. Die Sicherheitsreaktion kann beispielsweise eine der vorstehend beschriebenen Sicherheitsreaktionen umfassen. Innerhalb der Signalkette zum Ausführen der Sicherheitsreaktion kann, insbesondere nur, das finale Signal zum Ausführen der jeweiligen Sicherheitsreaktion verworfen werden, damit die Sicherheitsreaktion nicht ausgelöst wird. Die Signale vor dem finalen Signal zum Ausführen der jeweiligen Sicherheitsreaktion können hingegen planmäßig übertragen werden. Insbesondere werden die Signale zur Feststellung der Schutzfeldverletzung weiterhin übertragen. Das Deaktivieren von Sicherheitsreaktionen kann beispielsweise durch sogenannte "Muting"-Techniken erfolgen. Besonders vorteilhaft bei dieser Ausführungsform ist, dass Stillstandzeiten der Arbeitsmaschine bzw. der Anlage aufgrund von durch Überprüfungen verursachte Schutzfeldverletzungen vermieden werden. Insbesondere wird bei Deaktivierung der Sicherheitsreaktion, z.B. über organisatorische Maßnahmen und/oder durch die Ausgabe eines entsprechenden Signals, welches eine derartige Situation anzeigt, sichergestellt, dass in dem entsprechenden "unsicheren" Zeitraum keine Person in den gefahrbringenden Bereich eintreten kann.

Die Schutzfelder können auch abschnittsweise "gemutet" werden, d.h. es wird nur an der Stelle, an der die Prüfmaschine das Schutzfeld durchbricht, das Ausführen einer Sicherheitsreaktion deaktiviert. Dies ist insbesondere dadurch möglich, dass sowohl die Steuer- und Auswerteeinheit als auch die Prüfmaschine über die Information verfügen, wo das Schutzfeld gerade durchbrochen wird. Der restliche Bereich des Schutzfeldes bleibt insbesondere intakt, d.h. für den restlichen Bereich des Schutzfeldes wird bei einer Schutzfeldverletzung eine Sicherheitsreaktion ausgelöst. Unterbricht beispielsweise eine Person an einer anderen Stelle das Schutzfeld zusätzlich, so wird eine entsprechende Sicherheitsreaktion ausgelöst. Der Fall, dass eine Person an derselben Stelle eine Schutzfeldverletzung begeht wie die Prüfmaschine ist unwahrscheinlich. Für eine Person ist es nämlich mit einem erhöhten Hindernis verbunden, das Schutzfeld an dieser Stelle zu unterbrechen, da sie über die Prüfmaschine hinwegsteigen müsste. Somit kann die Arbeitsmaschine während einer Überprüfung des sicheren Sensors durch die Prüfmaschine in voller Produktivität weiterarbeiten. Zusätzlich kann aber auch das Schutzfeld bzw. der Sicherheitsbereich der Prüfmaschine zur Absicherung eines solchen Falls verwendet werden. Wenn also eine Person einen vorgegebenen Sicherheitsabstand zur Prüfmaschine unterschreitet, d.h. das Schutzfeld der Prüfmaschine verletzt, erfolgt nicht nur eine Sicherheitsreaktion der Prüfmaschine, z.B. die Prüfmaschine bleibt stehen, sondern auch eine Sicherheitsreaktion der Arbeitsmaschine, d.h. die zu prüfende Arbeitsmaschine wird abgestellt.

Gemäß einer Ausführungsform ist der sichere Sensor an einer mobilen Maschine, insbesondere einer weiteren mobilen Prüfmaschine, angebracht. Somit kann eine Prüfmaschine das Schutzfeld einer anderen Prüfmaschine oder allgemein einer anderen mobilen Maschine überprüfen. Das Schutzfeld stellt somit einen Sicherheitsbereich der mobilen Maschine dar, beispielsweise um Kollisionen zu vermeiden. Die Schutzfeldverletzung des Schutzfelds der mobilen Maschine kann beispielsweise vorliegen, wenn ein vorgegebener Sicherheitsabstand zur mobilen Maschine unterschritten wird. Wenn eine hohe Anzahl von Prüfmaschinen in einer Werkhalle vorhanden sind, können die entsprechenden Prüfmaschinen die Schutzfelder somit gegenseitig ohne größere Umwege regelmäßig prüfen.

Ein weiterer Aspekt der Erfindung bezieht sich auf ein Verfahren zum Überprüfen von Schutzfeldern zum Absichern einer Maschine mit einer mobilen Prüfmaschine, bei dem mindestens ein sicherer Sensor mindestens ein Schutzfeld überwacht und eine Steuer- und Auswerteeinheit, welche zumindest mittelbar mit dem sicheren Sensor und der Prüfmaschine verbunden ist,
unter Verwendung der Prüfmaschine eine Überprüfung des sicheren Sensors und/oder zumindest eines Abschnitts des Schutzfeldes durchführt,
basierend auf der Überprüfung des sicheren Sensors und/oder Schutzfeldes einen Fehlerzustand, insbesondere des sicheren Sensors und/oder der Prüfmaschine, feststellt, und
bei Feststellung eines Fehlerzustands eine sicherheitsgerichtete Maßnahme einleitet,
wobei die Steuer- und Auswerteeinheit ferner unter Verwendung einer weiteren Prüfmaschine eine weitere Überprüfung des Schutzfeldes durchführt,
wobei die weitere Überprüfung als Teil der sicherheitsgerichteten Maßnahme erfolgt,
wobei ein Fehlerzustand des sicheren Sensors festgestellt wird, wenn basierend auf der weiteren Überprüfung ein Fehlerzustand feststellt wird,
wobei ein Fehlerzustand der Prüfmaschine festgestellt wird, wenn basierend auf der weiteren Überprüfung kein Fehlerzustand festgestellt wird.

Für das Verfahren gelten die Ausführungen zu dem erfindungsgemäßen System entsprechend, dies gilt insbesondere hinsichtlich Vorteilen und Ausführungsformen.

Es ist zu beachten, dass jede Kombination der vorstehenden Ausführungsformen möglich ist, solange dies nicht explizit ausgeschlossen wurde.

Nachfolgend wird die Erfindung rein beispielhaft unter Bezugnahme auf die Zeichnungen dargestellt. Es zeigen:
- Fig. 1: eine schematische Übersichtsdarstellung eines Systems mit einem sicheren Sensor zur Überwachung eines Schutzfeldes, einer mobilen Prüfmaschine zur Überprüfung des Schutzfeldes und einer Steuer- und Auswerteeinheit,
- Fig. 2: eine perspektivische Darstellung eines Systems zur Überprüfung eines Schutzfeldes und der damit durchgeführten Überprüfung des Schutzfeldes, und
- Fig. 3: eine Draufsicht auf ein System zur Überprüfung eines Schutzfeldes und der damit durchgeführten Überprüfung des Schutzfeldes.

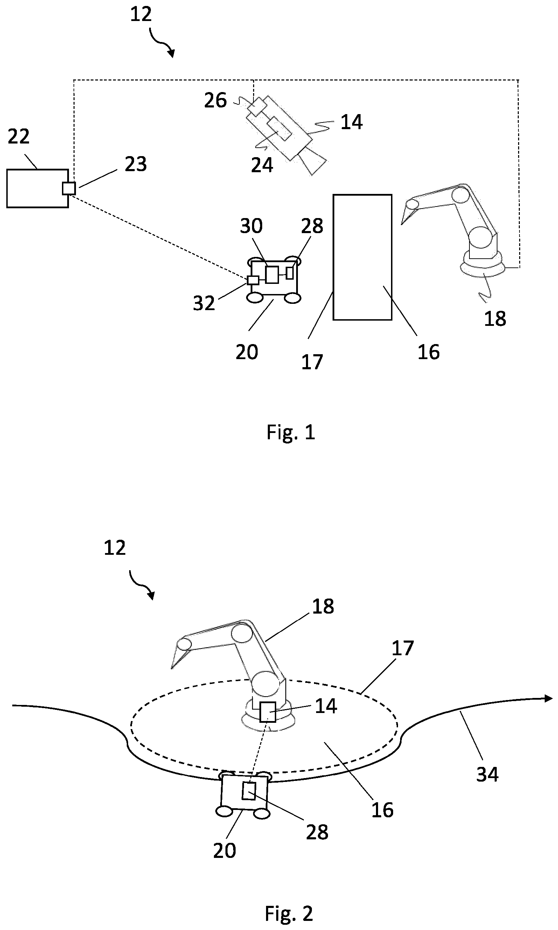

Fig. 1 zeigt eine schematische Übersichtsdarstellung eines Systems 12 mit einem sicheren Sensor 14 zur Überwachung eines Schutzfeldes 16, das eine Arbeitsmaschine 18 absichert, mit einer mobilen Prüfmaschine 20 zur Validierung des Schutzfeldes 16 und mit einer Steuer- und Auswerteeinheit 22, welche zumindest mittelbar mit dem sicheren Sensor 14, der Arbeitsmaschine 18 und der Prüfmaschine 20 drahtlos verbunden ist. Beispielsweise umfasst die Steuer- und Auswerteeinheit 22 eine Kommunikationsschnittstelle 23, die für mindestens ein Kommunikationsprotokoll, z.B. I/O-Link, Bluetooth, WLAN, Wi-Fi, 3G/4G/5G oder dergleichen, ausgebildet ist. Die Steuer- und Auswerteeinheit ist ferner ausgebildet, unter Verwendung der Prüfmaschine 20 eine Überprüfung des sicheren Sensors 14 und/oder zumindest eines Abschnitts des Schutzfeldes 16 durchzuführen, basierend auf der Überprüfung des sicheren Sensors 14 und/oder Schutzfeldes 16 einen Fehlerzustand, insbesondere des sicheren Sensors 14 und/oder der Prüfmaschine 20, festzustellen, und bei Feststellung eines Fehlerzustands eine sicherheitsgerichtete Maßnahme einzuleiten.

Vor Inbetriebnahme der Arbeitsmaschine 18 sowie im Laufe des Lebenszyklus der Arbeitsmaschine 18 ist eine Überprüfung der Sicherheitsanwendungen unter Absicherung durch das Schutzfeld 16 erforderlich. Hierfür kann die Steuer- und Auswerteeinheit 22 unter Verwendung der Prüfmaschine 20 entsprechende Überprüfungen des sicheren Sensors 14 und/oder des Schutzfeldes 16 durchführen und damit testen, ob der sichere Sensor 14 den Schutzfeldeingriff, d.h. ein Übertreten der Schutzfeldgrenze 17, erkennt und eine Sicherheitsreaktion, z.B. durch Erzeugen eines sicheren Absicherungssignals, auslöst und mit welcher Reaktionszeit. In Fig. 1 sind nur ein sicherer Sensor 14 und nur ein Schutzfeld 16 gezeigt, jedoch kann ein sicherer Sensor 14 auch mehrere Schutzfelder überwachen und es können mehrere sichere Sensoren eingesetzt werden, welche beispielsweise unterschiedliche und/oder die gleichen Schutzfelder überwachen.

In der realen Szenerie ist das Schutzfeld 16 unsichtbar, da typischerweise der sichere Sensor 14 mit Licht außerhalb des sichtbaren Spektrums arbeitet beziehungsweise ein sicherer Sensor 14 mit einem anderen unsichtbaren Wirkprinzip eingesetzt ist. Selbst noch mit Licht im visuellen Spektrum wären vielleicht Auftreffpunkte des Lichts erkennbar, nicht aber das Schutzfeld 16 als solches, da ja das Licht nicht anhält und während der Propagation durch Luft allenfalls aufgrund von Staub und dann nicht ausgerechnet exklusiv im Schutzfeld 16 sichtbar würde.

Der sichere Sensor 14 in Fig. 1 ist rein beispielhaft als Kamera dargestellt. Das ist eine bevorzugte Ausführungsform, wobei die Kamera eine normale Kamera oder eine 3D-Kamera sein kann. Für 3D-Kameras gibt es verschiedene zugrundeliegende Erfassungsprinzipien, wie eine Lichtlaufzeitkamera, eine Stereokamera oder eine Kamera mit einem Projektions- oder Lichtschnittverfahren. Weitere optoelektronische Alternativen sind nicht abschließend Laserscanner, Lichtgitter oder LIDAR-Sensoren, insbesondere mit einer Schutzglocke für eine Armspitze eines Roboters, wie beschrieben etwa in DE 10 2015 112 656 A1, wobei auch nicht-optische Erfassungsprinzipien wie Radar oder Ultraschall möglich sind. Derartige sichere Sensoren, die eine Schutzfeldüberwachung leisten, sind an sich bekannt und werden daher nicht im Detail beschrieben. Die Kamera als Beispiel eines sicheren Sensors 14 ist folglich nur ganz schematisch mit einer Kamerasteuerung 24 für die Schutzfeldauswertung und einem sicheren Ausgang 26 (OSSD, Output Signal Switching Device) zur Ausgabe eines Sicherheitsreaktionssignals entsprechend einer Schutzfeldverletzung gezeigt. Im Betrieb der Arbeitsmaschine 18 sorgt das Sicherheitsreaktionssignal über eine Verbindung des sicheren Ausgangs 26 zu der Arbeitsmaschine 18 dafür, dass eine Gefahr beseitigt wird, je nach Situation und Sicherheitsanwendung durch Sicherheitsreaktionen wie Ausweichen, Verlangsamen, andere Arbeitsschritte oder Anhalten der Arbeitsmaschine 18. Ein derartiges Sicherheitsreaktionssignal kann beim Feststellen eines Fehlerzustands auch von der Steuer- und Auswerteeinheit 22 an die Arbeitsmaschine 18 gesendet werden, um eine jeweilige sicherheitsgerichetete Maßnahme einzuleiten.

Die mobile Prüfmaschine 20 ist in Fig. 1 als AMR ausgebildet, welcher zumindest einen Prüfmaschinensensor 28 zur Erfassung seiner Umgebung, Position und/oder Ausrichtung umfasst. Der Prüfmaschinensensor 28 kann wie bereits der sichere Sensor 14 eine Kamera sein oder ein anderer Sensor, welcher auf einem der vorstehend genannten Erfassungsprinzipien basiert. Insbesondere kann die Prüfmaschine 20 eine Vielzahl gleicher und/oder unterschiedlicher Sensoren umfassen. Ferner kann die Prüfmaschine 20 eine Prüfmaschinensteuerung 30 umfassen, welche die Sensordaten des Prüfmaschinensensors 28 verarbeitet und über eine Kommunikationsschnittstelle 32 der Prüfmaschine mit der Steuer- und Auswerteeinheit 22 kommuniziert. Es ist auch möglich, dass die Prüfmaschine 20 die von dem Prüfmaschinensensor 28 erfassten Sensordaten direkt über die Kommunikationsschnittstelle 32 an die Steuer- und Auswerteeinheit 22 übermittelt, wobei die Steuer- und Auswerteeinheit 22 die Verarbeitung der Sensordaten übernimmt.

Die Steuer- und Auswerteeinheit 22 steht wie in Fig. 1 gezeigt mit sämtlichen Komponenten des Systems 12 im Austausch, d.h. empfängt Daten, tauscht Daten aus und/oder übermittelt Steueranweisungen. Die Steuer- und Auswerteeinheit 22 ist in Fig. 1 als zentrale Einheit dargestellt. Sie kann jedoch auch als verteiltes System ausgebildet sein. Beispielsweise kann sie durch einzelne Steuer- und Auswerteeinheiten z.B. des sicheren Sensors 14, der Arbeitsmaschine 18 und/oder der Prüfmaschine 20 gebildet sein. Die Steuer- und Auswerteeinheit 22 leitet eine Überprüfung des sicheren Sensors 14 und/oder zumindest eines Abschnitts des Schutzfeldes 16 ein, führt diese durch und/oder überwacht die Überprüfung. Die Steuer- und Auswerteeinheit 22 umfasst mindestens einen digitalen Rechenbaustein wie einen Mikroprozessor oder eine CPU (Central Processing Unit), ein FPGA (Field Programmable Gate Array), an DSP (Digital Signal Processor), einen ASIC (Application-Specific Integrated Circuit), einen KI-Prozessor, eine NPU (Neural Processing Unit), eine GPU (Graphic Processing Unit) oder dergleichen. Solche digitalen Rechenbausteine können im Übrigen auch die für die Kamerasteuerung 24 und/oder die Prüfmaschinensteuerung 30 verwendet werden. Die Steuer- und Auswerteeinheit 22 kann über die Kommunikationsschnittstelle 23 vorzugsweise direkt mit den einzelnen Komponenten des Systems 12 verbunden sein. Es ist aber auch denkbar, dass die Steuer- und Auswerteeinheit 22 mit einzelnen Komponenten mittelbar verbunden ist. Beispielsweise kann die Steuer- und Auswerteeinheit 22 über den sicheren Sensor 14 mit der Arbeitsmaschine 18 in Verbindung stehen. Die Steuer- und Auswerteeinheit 22 kann insbesondere als Teil eines Computers beliebiger Bauart einschließlich Notebooks, Smartphones, Tablets, einer (Sicherheits-)Steuerung, eines lokalen Netzwerks, eines Edge-Devices oder einer Cloud ausgebildet sein.

Die Steuer- und Auswerteeinheit 22 verarbeitet die von den einzelnen Komponenten des Systems 12 empfangenen Daten vorzugsweise in Echtzeit. Soll eine Überprüfung des sicheren Sensors 14 und/oder des Schutzfeldes 16 erfolgen, so weist die Steuer- und Auswerteeinheit 22 die Prüfmaschine 20 an, eine entsprechende Überprüfung zu starten. Für die Überprüfung des sicheren Sensors 14 und/oder des Schutzfeldes 16 gibt es dabei unterschiedliche Möglichkeiten:
1. eine Überprüfung der Position und/oder Ausrichtung des sicheren Sensors 14 (erste Überprüfungsart),
2. eine Überprüfung durch ein Testen der Schutzfeldgrenzen 17, ohne eine Schutzfeldverletzung zu provozieren (zweite Überprüfungsart), und
3. eine Überprüfung durch ein Testen der Schutzfeldgrenzen 17, indem eine Schutzfeldverletzung provoziert wird (dritte Überprüfungsart).

Die unterschiedlichen Überprüfungsarten können insbesondere kombiniert werden.

Gemäß der ersten Überprüfungsart wird beispielsweise basierend auf den Sensordaten des Prüfmaschinensensors 28 eine Position und/oder Ausrichtung des sicheren Sensors 14 ermittelt und basierend auf einem Vergleich der ermittelten Position und/oder Ausrichtung des sicheren Sensors 14 mit einer vorgegebenen Position und/oder Ausrichtung des sicheren Sensors 14 der Fehlerzustand ermittelt. Die Prüfmaschinensteuerung 30 ist beispielsweise dazu ausgebildet, basierend auf den Sensordaten des Prüfmaschinensensors 28 die Position und/oder Ausrichtung der Prüfmaschine 20 und die Position und/oder Ausrichtung des sicheren Sensor 14 in Bezug zur Prüfmaschine 20 zu ermitteln. Die zugehörigen Daten kann die Prüfmaschinensteuerung 30 an die Steuer- und Auswerteeinheit 22 senden, welche die Daten auswertet und z.B. mittels einer Koordinatentransformation die absolute Position und/oder Ausrichtung des sicheren Sensors 14 ermittelt. Die Steuer- und Auswerteeinheit 22 kann ferner die ermittelte Position und/oder Ausrichtung des sicheren Sensor 14 mit der gespeicherten vorgegebenen Position und/oder Ausrichtung des sicheren Sensors 14 vergleichen, um damit eine Abweichung oder keine Abweichung festzustellen. Weicht die ermittelte Position und/oder Ausrichtung des sicheren Sensors 14 von der vorgegebenen Position und/oder Ausrichtung des sicheren Sensors 14, insbesondere stärker als ein Abweichungsschwellenwert, ab, so wird ein Fehlerzustand festgestellt und eine sicherheitsgerichtete Maßnahme eingeleitet.

Fig. 2 veranschaulicht eine perspektivische Darstellung eines Systems 12 zur Überprüfung eines Schutzfeldes 16 und der damit durchgeführten Überprüfung gemäß der ersten und zweiten Überprüfungsart. Gemäß der zweiten Überprüfungsart legt die Steuer- und Auswerteeinheit 22 die Route 34 der Prüfmaschine 20 derart fest, dass die Prüfmaschine 20 zumindest abschnittsweise entlang der vorgegebenen Schutzfeldgrenzen 17 fährt, ohne die vorgegebenen Schutzfeldgrenzen 17 zu berühren und/oder zu überschreiten, wie in Fig. 2 dargestellt. Hierdurch wird geprüft, ob eine unplanmäßige Sicherheitsreaktion ausgelöst wird, wobei bei Auslösen einer unplanmäßigen Sicherheitsreaktion ein Fehlerzustand festgestellt wird. Zusätzlich zu der Überprüfung gemäß der zweiten Überprüfungsart führt die Steuer- und Auswerteeinheit 22, während die Prüfmaschine 20 entlang der vorgegebenen Schutzfeldgrenzen 17 fährt, kontinuierlich oder in vorgegebenen zeitlichen Abständen eine Überprüfung gemäß der ersten Überprüfungsart durch, um die Zuverlässigkeit der Gesamtüberprüfung und damit die Sicherheit des Systems zu erhöhen.

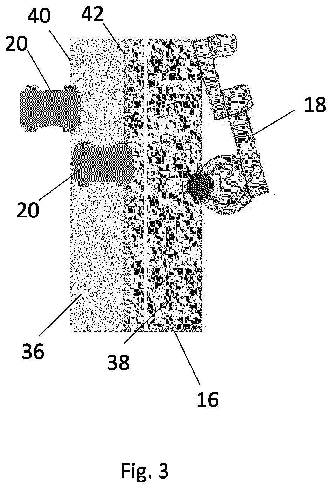

Fig. 3 zeigt ein System 12 zur Überprüfung eines Schutzfeldes 16 aus einer Vogelperspektive und eine gemäß einer dritten Überprüfungsart durchgeführte Überprüfung des Schutzfeldes 16. Das Schutzfeld 16 weist hierbei eine rechteckige Form auf, wobei das Schutzfeld 16 in zwei Schutzfeldbereiche 36, 38 unterschiedlicher Sicherheitsstufe geteilt ist, wobei das Überschreiten einer ersten Schutzfeldgrenze 40 des ersten Schutzfeldbereichs 36 von niedrigerer Sicherheitsrelevanz ist als das Überschreiten einer zweiten Schutzfeldgrenze 42 des zweiten Schutzfeldbereichs 38. Gemäß der dritten Überprüfungsart wird eine Schutzfeldverletzung bewusst provoziert. Wenn trotz Überschreitung eine jeweiligen Schutzfeldgrenze 40, 42, d.h. trotz Schutzverletzung, keine entsprechende Sicherheitsreaktion ausgelöst wird, wird ein Fehlerzustand festgestellt.

Die Steuer- und Auswerteeinheit 22 veranlasst hierzu die Prüfmaschine 20 nacheinander die unterschiedlichen Schutzfeldgrenzen 40, 42 zu überschreiten, um zu überprüfen, ob eine einer Sicherheitsstufe entsprechende Sicherheitsreaktion ausgelöst wird. Die Steuer- und Auswerteeinheit 22 weist die Prüfmaschine 20 in einem ersten Schritt dazu an, die erste Schutzfeldgrenze 40 anzufahren, zu überschreiten, zu stoppen, die Durchführung einer zugehörigen ersten Sicherheitsreaktion abzuwarten und zu evaluieren, ob die erste Sicherheitsreaktion planmäßig erfolgt ist. Die Steuer- und Auswerteeinheit 22 weist die Prüfmaschine 20 anschließend in einem zweiten Schritt dazu an, die zweite Schutzfeldgrenze 42, welche einer höheren Sicherheitsstufe zugeordnet ist, anzufahren, zu überschreiten, zu stoppen, die Durchführung einer zweiten Sicherheitsreaktion abzuwarten und zu evaluieren, ob die zweite Sicherheitsreaktion planmäßig erfolgt ist. Bleibt zumindest eine der beiden Sicherheitsreaktionen aus, so wird ein entsprechender Fehlerzustand festgestellt. Auch wenn in Fig. 3 zwei Prüfmaschinen eingezeichnet sind, soll dies nur die einzelnen Schritte der Überprüfung veranschaulichen, welche von der Prüfmaschine 20 ausgeführt werden. Grundsätzlich ist es aber auch möglich, dass die erste Schutzfeldgrenze 40 mittels einer ersten Prüfmaschine geprüft wird und die zweite Schutzfeldgrenze 42 mittels einer separaten zweiten Prüfmaschine.

### Bezugszeichenliste

- 12: System
- 14: sicherer Sensor
- 16: Schutzfeld
- 17: Schutzfeldgrenze
- 18: Arbeitsmaschine
- 20: Prüfmaschine
- 22: Steuer- und Auswerteeinheit
- 23: Kommunikationsschnittstelle der Steuer- und Auswerteeinheit
- 24: Kamerasteuerung
- 26: sicherer Ausgang
- 28: Prüfmaschinensensor
- 30: Prüfmaschinensteuerung
- 32: Kommunikationsschnittstelle der Prüfmaschine
- 34: Route
- 36: erster Schutzfeldbereich
- 38: zweiter Schutzfeldbereich
- 40: erste Schutzfeldgrenze
- 42: zweite Schutzfeldgrenze

## Patentansprüche

1. System (12) mit mindestens einem sicheren Sensor (14) zur Überwachung mindestens eines Schutzfeldes (16), einer mobilen Prüfmaschine (20) zum Überprüfen des Schutzfeldes (16) und einer Steuer- und Auswerteeinheit (22), welche zumindest mittelbar mit dem sicheren Sensor (14) und der Prüfmaschine (20) verbunden ist;
wobei die Steuer- und Auswerteeinheit (22) ausgebildet ist:
unter Verwendung der Prüfmaschine (20) eine Überprüfung des sicheren Sensors (14) und/oder zumindest eines Abschnitts des Schutzfeldes (16) durchzuführen,
basierend auf der Überprüfung des sicheren Sensors (14) und/oder Schutzfeldes (16) einen Fehlerzustand, insbesondere des sicheren Sensors (14) und/oder der Prüfmaschine (20), festzustellen, und
bei Feststellung eines Fehlerzustands eine sicherheitsgerichtete Maßnahme einzuleiten,
wobei die Steuer- und Auswerteeinheit (22) ferner ausgebildet ist:
unter Verwendung einer weiteren Prüfmaschine (20) eine weitere Überprüfung des Schutzfeldes (16) durchzuführen,
wobei die weitere Überprüfung als Teil der sicherheitsgerichteten Maßnahme erfolgt,
wobei ein Fehlerzustand des sicheren Sensors (14) festgestellt wird, wenn basierend auf der weiteren Überprüfung ein Fehlerzustand feststellt wird, wobei ein Fehlerzustand der Prüfmaschine (20) festgestellt wird, wenn basierend auf der weiteren Überprüfung kein Fehlerzustand festgestellt wird.

2. System (12) nach Anspruch 1,
wobei die Prüfmaschine (20) eine autonome Maschine, insbesondere ein Automated Guided Vehicle (AGV) oder ein Autonomous Mobile Robot (AMR), ist.

3. System (12) nach Anspruch 1 oder 2,
wobei die Prüfmaschine (20) zumindest einen Sensor (28) zur Erfassung ihrer Umgebung, Position und/oder Ausrichtung umfasst,
wobei die Überprüfung des Schutzfeldes (16) umfasst:
basierend auf den Sensordaten des Prüfmaschinensensors (28) eine Position und/oder Ausrichtung des sicheren Sensors (14) zu ermitteln und basierend auf einem Vergleich der ermittelten Position und/oder Ausrichtung des sicheren Sensors (14) mit einer vorgegebenen Position und/oder Ausrichtung des sicheren Sensors (14) den Fehlerzustand zu ermitteln.

4. System (12) nach Anspruch 3,
wobei die Steuer- und Auswerteeinheit (22) ausgebildet ist, basierend auf der ermittelten Position und/oder Ausrichtung des sicheren Sensors (14) eine Position und/oder einen Bereich des Schutzfeldes (16) zu ermitteln und
basierend auf einem Vergleich der ermittelten Position und/oder dem ermittelten Bereich des Schutzfeldes (16) mit einer vorgegebenen Position und/oder einem vorgegebenen Bereich des Schutzfeldes (16) einen Fehlerzustand zu ermitteln.

5. System (12) nach einem der Ansprüche 3 oder 4,
wobei die Überprüfung des Schutzfeldes (16) umfasst:
basierend auf den Sensordaten des Prüfmaschinensensors (28) eine erste Position und/oder Ausrichtung der Prüfmaschine (20) zu ermitteln und basierend auf den Sensordaten des sicheren Sensors (14) eine zweite Position und/oder Ausrichtung der Prüfmaschine (20) zu ermitteln, und basierend auf einem Vergleich der ersten Position und/oder Ausrichtung der Prüfmaschine (20) mit der zweiten Position und/oder Ausrichtung der Prüfmaschine (20) den Fehlerzustand zu ermitteln.

6. System (12) nach einem der vorstehenden Ansprüche,
wobei die Überprüfung des Schutzfeldes (16) umfasst, dass die Steuer- und Auswerteeinheit (22) die Prüfmaschine (20) dazu veranlasst, sich zumindest abschnittsweise entlang der vorgegebenen Schutzfeldgrenzen (17) zu bewegen, insbesondere ohne die vorgegebenen Schutzfeldgrenzen (17) zu berühren und/oder zu überschreiten.

7. System (12) nach Anspruch 6,
wobei die Steuer- und Auswerteeinheit (22) ausgebildet ist,
während sich die Prüfmaschine (20) entlang der vorgegebenen Schutzfeldgrenzen (17) bewegt, kontinuierlich oder in vorgegebenen zeitlichen Abständen eine der in den vorstehenden Ansprüchen 3 bis 5 beschriebenen Überprüfungen durchzuführen.

8. System (12) nach einem der vorstehenden Ansprüche,
wobei die Überprüfung des Schutzfeldes (16) umfasst, dass die Steuer- und Auswerteeinheit (22) die Prüfmaschine (20) dazu veranlasst, zumindest eine Schutzfeldgrenze (17) des Schutzfeldes (16) zumindest teilweise zu überschreiten.

9. System (12) nach einem der vorstehenden Ansprüche,
wobei die Steuer- und Auswerteeinheit (22) ausgebildet ist,
das überprüfte Schutzfeld (16) und/oder den überprüften Schutzfeldabschnitt und/oder einen Zeitpunkt und/oder eine Dauer der Überprüfung des Schutzfeldes (16) in einer Datenbank zu speichern.

10. System (12) nach einem der vorstehenden Ansprüche,
wobei die Steuer- und Auswerteeinheit (22) ausgebildet ist,
während einer Überprüfung des Schutzfeldes (16) das Ausführen von Sicherheitsreaktionen, welche den Betrieb einer Arbeitsmaschine (18) einschränken, zumindest teilweise zu deaktivieren.

11. System (12) nach einem der vorstehenden Ansprüche,
wobei der sichere Sensor an einer mobilen Maschine, insbesondere einer weiteren mobilen Prüfmaschine, angebracht ist.

12. Verfahren zum Überprüfen von Schutzfeldern (16) zum Absichern einer Maschine mit einer mobilen Prüfmaschine (20), bei dem mindestens ein sicherer Sensor (14) mindestens ein Schutzfeld (16) überwacht, und
eine Steuer- und Auswerteeinheit (22), welche zumindest mittelbar mit dem sicheren Sensor (14) und der Prüfmaschine (20) verbunden ist,
unter Verwendung der Prüfmaschine (20) eine Überprüfung des sicheren Sensors (14) und/oder zumindest eines Abschnitts des Schutzfeldes (16) durchführt,
basierend auf der Überprüfung des sicheren Sensors (14) und/oder Schutzfeldes (16) einen Fehlerzustand, insbesondere des sicheren Sensors (14) und/oder der Prüfmaschine (20), feststellt, und
bei Feststellung eines Fehlerzustands eine sicherheitsgerichtete Maßnahme einleitet,
wobei die Steuer- und Auswerteeinheit (22) ferner unter Verwendung einer weiteren Prüfmaschine (20) eine weitere Überprüfung des Schutzfeldes (16) durchführt,
wobei die weitere Überprüfung als Teil der sicherheitsgerichteten Maßnahme erfolgt,
wobei ein Fehlerzustand des sicheren Sensors (14) festgestellt wird, wenn basierend auf der weiteren Überprüfung ein Fehlerzustand feststellt wird,
wobei ein Fehlerzustand der Prüfmaschine (20) festgestellt wird, wenn basierend auf der weiteren Überprüfung kein Fehlerzustand festgestellt wird.

## Claims

1. A system (12) comprising at least one safety sensor (14) for monitoring at least one protective field (16), a mobile testing machine (20) for checking the protective field (16) and a control and evaluation unit (22) which is at least indirectly connected to the safety sensor (14) and the testing machine (20);
wherein the control and evaluation unit (22) is configured:
to perform a check of the safety sensor (14) and/or at least a section of the protective field (16) using the testing machine (20),
to detect a fault condition, in particular of the safety sensor (14) and/or the testing machine (20), based on the check of the safety sensor (14) and/or the protective field (16), and
to initiate a safety-related measure upon detection of a fault condition,
wherein the control and evaluation unit (22) is further configured:
to perform a further check of the protective field (16) using a further testing machine (20),
wherein the further check is performed as part of the safety-related measure,
wherein a fault condition of the safety sensor (14) is detected if, based on the further check, a fault condition is detected, wherein a fault condition of the testing machine (20) is detected if, based on the further check, no fault condition is detected.

2. A system (12) according to claim 1,
wherein the testing machine (20) is an autonomous machine, in particular an Automated Guided Vehicle (AGV) or an Autonomous Mobile Robot (AMR).

3. A system (12) according to claim 1 or 2,
wherein the testing machine (20) comprises at least one sensor (28) for detecting its environment, position and/or orientation,
wherein the check of the protective field (16) comprises:
determining a position and/or orientation of the safety sensor (14) based on the sensor data of the testing machine sensor (28) and determining the fault condition based on a comparison of the determined position and/or orientation of the safety sensor (14) with a predefined position and/or orientation of the safety sensor (14).

4. A system (12) according to claim 3,
wherein the control and evaluation unit (22) is configured to determine a position and/or a region of the protective field (16) based on the determined position and/or orientation of the safety sensor (14) and
to determine a fault condition based on a comparison of the determined position and/or the determined region of the protective field (16) with a predefined position and/or a predefined region of the protective field (16).

5. A system (12) according to one of the claims 3 or 4,
wherein the check of the protective field (16) comprises:
determining a first position and/or orientation of the testing machine (20) based on the sensor data of the testing machine sensor (28), and
determining a second position and/or orientation of the testing machine (20) based on the sensor data of the safety sensor (14), and
determining the fault condition based on a comparison of the first position and/or orientation of the testing machine (20) with the second position and/or orientation of the testing machine (20).

6. A system (12) according to any one of the preceding claims,
wherein the check of the protective field (16) comprises the control and evaluation unit (22) causing the testing machine (20) to move at least in sections along the predefined protective field boundaries (17), in particular without touching and/or crossing the predefined protective field boundaries (17).

7. A system (12) according to claim 6,
wherein the control and evaluation unit (22) is configured to perform, while the testing machine (20) moves along the predefined protective field boundaries (17), one of the checks described in the preceding claims 3 to 5 continuously or at predefined time intervals.

8. A system (12) according to any one of the preceding claims,
wherein the check of the protective field (16) comprises the control and evaluation unit (22) causing the testing machine (20) to at least partially cross at least one protective field boundary (17) of the protective field (16).

9. A system (12) according to any one of the preceding claims,
wherein the control and evaluation unit (22) is configured to store the checked protective field (16) and/or the checked protective field section and/or a point in time and/or a duration of the check of the protective field (16) in a database.

10. A system (12) according to any one of the preceding claims,
wherein the control and evaluation unit (22) is configured, during a check of the protective field (16), to at least partially deactivate the execution of safety reactions that restrict the operation of a work machine (18).

11. A system (12) according to any one of the preceding claims,
wherein the safety sensor is attached to a mobile machine, in particular a further mobile testing machine.

12. A method for checking protective fields (16) to safeguard a machine using a mobile testing machine (20), in which at least one safety sensor (14) monitors at least one protective field (16), and
a control and evaluation unit (22), which is at least indirectly connected to the safety sensor (14) and the testing machine (20),
performs a check of the safety sensor (14) and/or at least a section of the protective field (16) using the testing machine (20),
detects a fault condition, in particular of the safety sensor (14) and/or the testing machine (20), based on the check of the safety sensor (14) and/or protective field (16), and
initiates a safety-related measure upon detection of a fault condition, wherein the control and evaluation unit (22) further performs a further check of the protective field (16) using a further testing machine (20),
wherein the further check is performed as part of the safety-related measure,
wherein a fault condition of the safety sensor (14) is detected if a fault condition is detected based on the further check,
wherein a fault condition of the testing machine (20) is detected if, based on the further check, no fault condition is detected.

## Revendications

1. Système (12) comprenant au moins un capteur de sécurité (14) destiné à surveiller au moins un champ de protection (16), une machine de contrôle mobile (20) destinée à vérifier le champ de protection (16) et une unité de commande et d'évaluation (22) qui est reliée au moins indirectement au capteur de sécurité (14) et à la machine de contrôle (20) ;
l'unité de commande et d'évaluation (22) étant conçue pour :
pour effectuer, à l'aide de la machine de contrôle (20), une vérification du capteur de sécurité (14) et/ou d'au moins une section du champ de protection (16),
sur la base de la vérification du capteur de sécurité (14) et/ou du champ de protection (16), de détecter un état de défaut, en particulier du capteur de sécurité (14) et/ou de la machine de contrôle (20), et
en cas de détection d'un état de défaut, déclencher une mesure de sécurité, l'unité de commande et d'évaluation (22) étant en outre conçue pour :
pour effectuer une vérification supplémentaire du champ de protection (16) à l'aide d'une autre machine de contrôle (20),
cette vérification supplémentaire s'effectuant dans le cadre de la mesure de sécurité,
un état de défaut du capteur de sécurité (14) étant détecté si un état de défaut est détecté sur la base de cette vérification supplémentaire, un état de défaut de la machine de contrôle (20) étant détecté si aucun état de défaut n'est détecté sur la base de cette vérification supplémentaire.

2. Système (12) selon la revendication 1,
dans lequel la machine de contrôle (20) est une machine autonome, en particulier un véhicule à guidage automatique (AGV) ou un robot mobile autonome (AMR).

3. Système (12) selon la revendication 1 ou 2,
dans lequel la machine de contrôle (20) comprend au moins un capteur (28) pour l'acquisition de son environnement, de sa position et/ou de son orientation,
la vérification du champ de protection (16) comprenant :
la détermination d'une position et/ou d'une orientation du capteur de sécurité (14) sur la base des données du capteur (28) de la machine de contrôle, et la détermination de l'état de défaut sur la base d'une comparaison entre la position et/ou l'orientation déterminée du capteur de sécurité (14) et une position et/ou une orientation prédéfinie du capteur de sécurité (14).

4. Système (12) selon la revendication 3,
dans lequel l'unité de commande et d'évaluation (22) est conçue pour déterminer, sur la base de la position et/ou de l'orientation déterminée du capteur de sécurité (14), une position et/ou une zone du champ de protection (16) et
déterminer un état de défaut sur la base d'une comparaison entre la position et/ou la zone déterminées du champ de protection (16) et une position et/ou une zone prédéfinies du champ de protection (16).

5. Système (12) selon l'une des revendications 3 ou 4,
dans lequel la vérification du champ de protection (16) comprend :
déterminer, sur la base des données du capteur de la machine de contrôle (28), une première position et/ou orientation de la machine de contrôle (20) et déterminer, sur la base des données du capteur de sécurité (14), une deuxième position et/ou orientation de la machine de contrôle (20), et
déterminer l'état de défaut sur la base d'une comparaison entre la première position et/ou orientation de la machine de contrôle (20) et la deuxième position et/ou orientation de la machine de contrôle (20).

6. Système (12) selon l'une des revendications précédentes,
dans lequel la vérification du champ de protection (16) comprend le fait que l'unité de commande et d'évaluation (22) amène la machine de contrôle (20) à se déplacer au moins par sections le long des limites prédéfinies du champ de protection (17), en particulier sans toucher et/ou franchir les limites prédéfinies du champ de protection (17).

7. Système (12) selon la revendication 6,
dans lequel l'unité de commande et d'évaluation (22) est conçue pour, pendant que la machine de contrôle (20) se déplace le long des limites prédéfinies du champ de protection (17), effectuer en continu ou à des intervalles de temps prédéfinis l'une des vérifications décrites dans les revendications 3 à 5 ci-dessus.

8. Système (12) selon l'une des revendications précédentes,
dans lequel la vérification du champ de protection (16) comprend le fait que l'unité de commande et d'évaluation (22) amène la machine de contrôle (20) à franchir au moins partiellement au moins une limite (17) du champ de protection (16).

9. Système (12) selon l'une des revendications précédentes,
dans lequel l'unité de commande et d'évaluation (22) est conçue pour :
enregistrer dans une base de données le champ de protection vérifié (16) et/ou la section du champ de protection vérifiée et/ou un moment et/ou une durée de la vérification du champ de protection (16).

10. Système (12) selon la revendication 9,
dans lequel l'unité de commande et d'évaluation (22) est conçue pour, pendant une vérification du champ de protection (16), désactiver au moins partiellement l'exécution de réactions de sécurité qui limitent le fonctionnement d'une machine de travail (18).

11. Système (12) selon l'une des revendications précédentes,
dans lequel le capteur de sécurité est monté sur une machine mobile, en particulier une autre machine de contrôle mobile.

12. Procédé de vérification de champs de protection (16) destinés à sécuriser une machine à l'aide d'une machine de contrôle mobile (20), dans lequel au moins un capteur de sécurité (14) surveille au moins un champ de protection (16), et
une unité de commande et d'évaluation (22), qui est reliée au moins indirectement au capteur de sécurité (14) et à la machine de contrôle (20), effectue, à l'aide de la machine de contrôle (20), une vérification du capteur de sécurité (14) et/ou d'au moins une section du champ de protection (16), détecte, sur la base de la vérification du capteur de sécurité (14) et/ou du champ de protection (16), un état de défaut, en particulier du capteur de sécurité (14) et/ou de la machine de contrôle (20), et
en cas de détection d'un état de défaut, déclenche une mesure de sécurité, l'unité de commande et d'évaluation (22) effectuant en outre, à l'aide d'une autre machine de contrôle (20), une vérification supplémentaire du champ de protection (16),
cette vérification supplémentaire s'effectuant dans le cadre de la mesure de sécurité,
un état de défaut du capteur de sécurité (14) étant détecté si un état de défaut est détecté sur la base de cette vérification supplémentaire,
un état de défaut de la machine de contrôle (20) étant détecté si, sur la base de cette vérification supplémentaire, aucun état de défaut n'est détecté.
